# EUROPÄISCHE PATENTSCHRIFT

(11) **EP 0 608 209 B1**
(45) Veröffentlichungstag und Bekanntmachung des Hinweises auf die Patenterteilung: **08.10.1997**
(21) Anmeldenummer: 94890010.5
(22) Anmeldetag: 14.01.1994
(51) Int. Cl.: G01D 5/38

(54) **Photoelektrische Positionsmesseinrichtung**
Photo-electrical position measuring device
Dispositif photo-électrique pour mesurer la position

(30) Priorität: 21.01.1993 AT 83/93
(43) Veröffentlichungstag der Anmeldung: 27.07.1994
(73) Patentinhaber: RSF-Elektronik Gesellschaft m.b.H., A-5121 Tarsdorf 93 (AT)
(72) Erfinder: Rieder, Heinz, A-5110 Oberndorf (AT)
(74) Vertreter: Hübscher, Heiner, Dipl.-Ing.

(56) Entgegenhaltungen:
- EP-A- 0 509 979
- Dissertation von J. Wilhelm Aufnehmer zur Messung von Lageänderungen TU Hannover 1978
- PATENT ABSTRACTS OF JAPAN vol. 7, no. 10 (P-168) (1155) 14. Januar 1983 & JP-A-57 169 613 (TOUKIYOU KOUGAKU KIKAI K.K.) 19. Oktober 1982

## Beschreibung

Die Erfindung betrifft eine photoelektrische Positionsmeßeinrichtung, mit einem Maßstab-Phasengitter, wenigstens einem relativ zum Maßstab verstellbaren Abtast-Phasengitter, wenigstens einer relativ zu dem bzw. den Abtast-Phasengittern feststehenden Lichtquelle mit Kollimator und Photoempfängern, die Gruppen bestimmter Beugungsordnung aus dem durch die zweimalige Beugung des Lichtes an dem bzw. den Phasengittern und die wenigstens einmalige Beugung am Maßstab-Phasensgitter entstehenden Interferenzbildern empfangen und entsprechend von deren Intensitätsänderungen bei der Relativverstellung von Abtast- und Maßstab-Phasengittern periodische, gegeneinander phasenverschobene Meßsignale erzeugen.

Eine derartige Positionsmeßeinrichtung ist unter anderem aus der EP-A-0 509 979 bekannt. Bei derartigen Positionsmeßeinrichtungen wird nach dem Prinzip des sogenannten Dreigitterschrittgebers gearbeitet, dessen Grundlagen in der 1978 veröffentlichten Dissertation von J. Willhelm "Dreigitterschrittgeber-photoelektrische Aufnehmer zur Messung von Lageänderungen" (TU Hannover) ausführlich in der Theorie erläutert sind. Bei reflektierenden Phasengittern als Maßstab wird das Licht im Abtastphasengitter zweimal gebeugt. Bei einem transparenten Maßstab kann an der zweiten Maßstabseite ein weiteres Abtastphasengitter vorgesehen werden und schließlich ist es auch möglich, das durch das erste Abtastphasengitter und den transparenten Maßstab gebeugte Licht über ein Umleitprisma an der Maßstabrückseite über ein Teilstück der Maßstablänge und dann durch den Maßstab und ein weiteres Abtastgitter zu den Empfängern zu leiten, so daß hier eine zweimalige Beugung des Lichtes am Maßstab stattfindet.

Nach der EP-A-0 509 979 werden zur Erzeugung von je zwei um 180° phasenverschobene Signale enthaltenden Signalpaaren, die gegeneinander um 90° phasenversetzt sind, am Maßstab zwei nebeneinander verlaufende um ein 1/8 der Gitterkonstante versetzte Teilungsspuren vorgesehen, wobei das Abtastgitter für beide Teilungsspuren gemeinsam ist und für jede Teilungsspur zwei Photoempfänger zum Empfang der Interferenz der in dieser Richtung gebeugten Strahlenbündel vorgesehen werden, so daß durch entsprechende Zusammenführung der Signale aus den Signalpaaren in Antiparallelschaltungen einander verstellrichtungsabhängig vor- und nacheilende analoge Meßsignale erhalten werden, die sich zur Erzeugung digitaler Zählsignale auswerten lassen, wobei ähnliche Auswertungsschaltungen Verwendung finden können, wie sie bei üblichen Inkrementalmeßsystemen im Einsatz sind.

Grundsätzlich können bei allen Dreigitterschrittgebern der bisherigen Bauart insbesondere durch Teilungsfehler der einzelnen Gitter und/oder Anbautoleranzen der Abtastgitter gegenüber dem bzw. den Maßstabgittern sowie durch Verkantungen der Abtastgitter Phasenfehler auftreten, so daß langwierige Justiereinstellungen zur Erzielung brauchbarer Signale bei der Messung notwendig werden.

Um den Phasenfehler zu beherrschen und dabei trotzdem auswertbare Signalpaare mit entsprechendem Phasenversatz zu erhalten, arbeitet ein Meßsystem nach Patent Abstracts of Japan, Vol. 7, No. 10 (P-168) (1155), 14. Jänner 1983 & JP-A-57 169 613, mit einem Phasengitter als Maßstab, aber zwei miteinander gekuppelten ,aus Lichtquelle, Kollimator, Abtastphasengittern und Photoempfängern bestehenden Meßsystemen, bei denen wenigstens die Lichtquelle des einen Meßsystems, gegebenenfalls aber auch das gesamte Meßsystem in Abtastrichtung gegenüber dem anderen Meßsystem einstellbar ist. Diese Ausführung ist äußerst aufwendig und hat den prinzipiellen Nachteil, daß zwangsweise an den beiden Meßsystemen Signale aus im großen Längsabstand voneinander liegenden, gegebenenfalls durch Teilungsfehler unterschiedlichen Maßstabstellen verarbeitet werden.

Die gleichen Nachteile hat auch ein Vorschlag in der Dissertation von J. Willhelm, rückseitig an einem entsprechend großen Abtast-Phasengitter in Meßverstellrichtung hintereinander und gegengleich quer zur Meßrichtung geneigte optische Prismenkeile anzuordnen, um aus den abgelenkten Teilstrahlen wieder phasenversetzte Signale zu erhalten. Auch hier werden die Signale von in Maßstablängsrichtung aufeinanderfolgenden und nicht von gleichen Maßstabbereichen gewonnen.

Der Erfindung liegt die Aufgabe zugrunde eine Meßeinrichtung der eingangs genannten Art zu schaffen, bei der große Anbautoleranzen bei einfacher Fertigung zulässig sind, eine hohe Meßgenauigkeit erzielt wird und eine einfache Justierung zum Abgleich des Phasenfehlers ermöglicht wird.

Die gestellte Aufgabe wird prinzipiell dadurch gelöst, daß in den Lichtstrahlengang wenigstens ein Leit-Phasengitter mit gegenüber dem Maßstab- und Abtastphasengitter querverlaufenden Stegen und Furchen eingeschaltet ist, welches das der Beugung unterworfene Lichtstrahlenbündel quer zur Beugungsrichtung an Maßstab- und Abtastphasengittern in zwei Teilstrahlenbereiche auffächert und daß für die Gruppen gleicher Beugungsrichtung der Teilstrahlenbündel gesonderte Photoempfänger vorhanden sind. Grundsätzlich ermöglicht die erfindungsgemäße Positionsmeßeinrichtung die Verwendung einfacher Maßstab- und Abtastphasengitter, wobei trotzdem die phasenversetzten Signalpaare am gleichen Längsbereich des Maßstab-Phasengitters erzeugt werden, also die Möglichkeit besteht, auch die phasenversetzten Signalpaare aus in Querrichtung aneinander grenzenden bzw. ineinander übergehenden Abtaststellen am Maßstab-Phasengitter zu erzeugen. Die Auffächerung des Lichtstrahlenbündels am Leitphasengitter wird durch entsprechende Ausbildung und Anordnung dieses Leitphasengitters vorzugsweise nur so weit getrieben, daß bei einem Dreigitter-Schrittgeber üblicher Bauart die Einfallsbereiche der Teilstrahlenbündel ineinander übergehen, aber trotzdem eine genügend große örtliche Trennung der Interferenzbilder am Ort der Photoempfänger erreicht wird.

Nach einer bevorzugten Ausführung ist vorgesehen, daß das Leit-Phasengitter ein Steg-/Furchenverhältnis von 1 : 1 bei einer der Wellenlänge des eingesetzten Lichtes entsprechenden Furchentiefe aufweist, so daß es das Licht vorwiegend in die Beugungsrichtungen +1. und -1.-Ordnung beugt.

In der bisher beschriebenen Ausbildung ergibt sich bei dieser photoelektrischen Positionsmeßeinrichtung gegenüber der Konstruktion nach der EP-A-509 979 eine Vereinfachung des Gesamtaufbaues wegen des Wegfalles der zweiten Teilungsspur am Maßstab und eine Erhöhung der Genauigkeit, da Verkantungsfehler der Abtasteinheit sich nur mehr geringer auswirken können, weil nahe beisammen liegende Maßstabbereiche in einer im wesentlichen gegenüber Abverkantung neutralen Abtastzone abgetastet werden. Somit ist eine Einfeld-Gegentaktabtastung weitgehend realisiert.

Um weiterhin noch auftretende Phasenfehler insbesondere durch Abstandstoleranzen bedingte Phasenfehler ausgleichen zu können, ist nach einer Weiterbildung das Leit-Phasengitter um eine normal zu seiner Hauptebene verlaufende Achse drehend einstellbar. Grundsätzlich kann das Leit-Phasengitter zwischen dem Abtastphasengitter und dem Maßstabphasengitter angeordnet werden, so daß es bei reflektierendem Maßstabphasengitter das Licht zweimal beugt. Eine andere Variante ermöglicht die Anordnung des Leit-Phasengitters zwischen Lichtquelle und Kollimator oder zwischen Kollimator und Abtastphasengitter.

Zur Vereinfachung des Gesamtaufbaues ist nach einer Weiterbildung das Leit-Phasengitter mit dem bzw. dem einen Abtast-Phasengitter zu einem Kreuzgitter zusammengefaßt, wobei vorzugsweise die Gitterlinien einander in einem von 90° abweichenden Winkel, z. B. unter 45°, kreuzen, wenn, wie oben erwähnt, eine zweimalige Beugung des Lichtes an diesem Gitter stattfindet.

Wie schon eingangs angedeutet wurde, empfiehlt sich eine Ausführung, nach der das optische Leit-Phasengitter die Teilstrahlenbündel nur so weit spreizt, daß sich ihre Einfallsbereiche auf das Maßstab-Phasengitter weitgehend überlappen.

Weitere Einzelheiten und Vorteile der Erfindung entnimmt man der nachfolgenden Zeichnungsbeschreibung.

In der Zeichnung ist die Erfindung beispielsweise anschaulicht. Es zeigen
- Fig. 1: in stark schematisierter Darstellungsweise die prinzipielle Anordnung einer erfindungsgemäßen photoelektrischen Positionsmeßeinrichtung im Schaubild, wobei zur Verdeutlichung der Funktionsweise bei dem als reflektierend angenommenen Maßstab-Phasengitter Abtastgitter, Leitphasengitter und Kollimator nocheinmal an der Rückseite dargestellt wurden, der gesamte Strahlengang also entfaltet ist,
- Fig. 2: eine Seitenansicht zu Fig. 1 und
- Fig. 3: eine Draufsicht zu Fig. 2.

In der Zeichnung werden gleiche Teile mit gleichen Bezugszeichen bezeichnet. Die gedachte Zweitanordnung der Bauteile bei der entfalteten Darstellung wurde jeweils durch den Zusatz eines Striches gekennzeichnet.

Grundsätzlich ist ein über die Länge bzw. den Umfang eines Meßbereiches durchlaufendes Maßstab-Phasengitter 1 ein Abtastphasengitter 2, 2' wenigstens eine Lichtquelle 3 und ein Kollimator 4, 4' vorhanden, wobei Photoempfänger 5, 6 und 7, 8 vorhanden sind. Mit Ausnahme der besonderen Anordnung der Photoempfänger 5 bis 8 entspricht das Meßsystem in der bisher beschriebenen Ausführung den bekannten Dreigitterschrittgebern. Die Lichtquelle 3 kann eine LED, LD, Glühlampe oder ein Laser sein. Der Maßstab 1 ist ein reflektierender Maßstab mit bestimmtem Steg-Furchenverhältnis. Das Abtastgitter 2, 2' besitzt ein deutlich von 1 : 1 abweichendes Steg-Furchenverhältnis. Zwischen dem Abtastgitter 2, 2' und dem Maßstab 1 ist ein Leit-Phasengitter 9, 9' angebracht. Das beispielsweise ein Steg-Furchenverhältnis von 1 : 1 bei einer der Wellenlänge des eingesetzten Lichtes entsprechenden Furchentiefe aufweist, so daß es das Licht vorwiegend in die Beugungsrichtungen +1. und -1. Ordnung beugt.

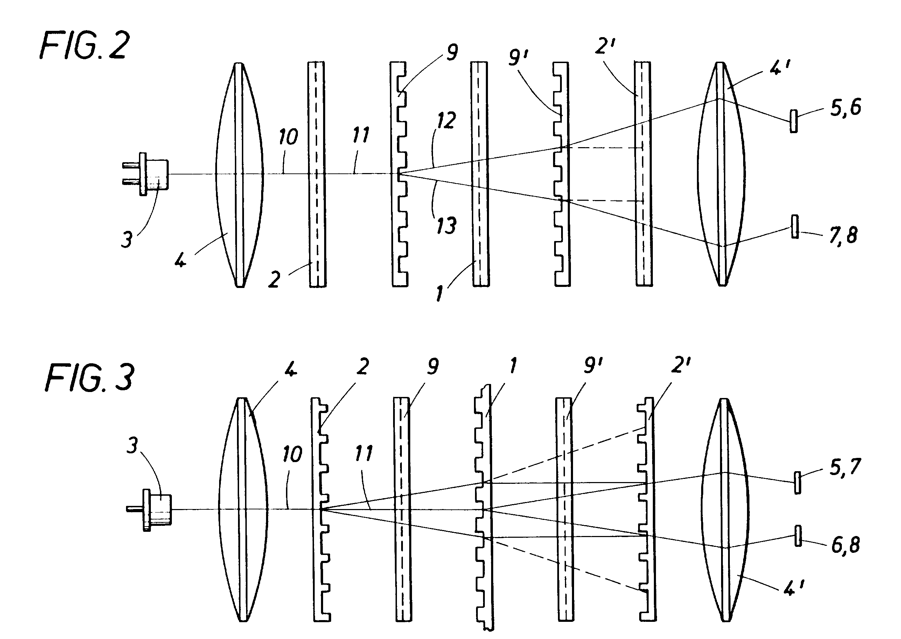

Bei der Messung wird das am Kollimator 4 kollimierte Licht (Lichtstrahl 10) zunächst am Abtastphasengitter 2 gebeugt und das so entstehende einfache Lichtbündel 11 wird nun beim ersten Durchgang durch das Leit-Phasengitter 9 in zwei Teilstrahlenbereiche 12, 13 (nur in Fig.2 bezeichnet) aufgefächert, die mit geringem Mittenabstand voneinander auf das Maßstab-Phasengitter 1 fallen und von diesem unter Beugung zum Gitter 9' zurück reflektiert werden, hier noch einmal gebeugt werden und nach weiterer Beugung am Abtastphasengitter 2' über den Kollimator 4' die Photoempfänger 5, 6 bzw. 7, 8 beleuchten. Durch ein Steg-Furchenverhältnis von 1 : 1 bei der Wellenlänge des eingesetzten Lichtes entsprechenden Furchentiefe des Leitphasengitters sowie durch entsprechende Bemessung des Steg-Furchenverhältnisses beim Abtastphasengitter 2 und beim Maßstab-Phasengitter 1 wird beim Ausführungsbeispiel erreicht, daß die Photoempfänger 5 und 6 bzw. 7 und 8 die Interferenzen der in ihrer Richtung gebeugten Teilstrahlenbündel 12, 13 empfangen, die bei jedem der beiden Paare 5, 6 bzw. 7, 8 gegeneinander einen Sollversatz von 180° aufweisen. Der Sollversatz der in den Paaren 5, 6 bzw. 7, 8 erzeugten Signale gegenüber den Signalen des anderen Paares beträgt 90°. Bei ordnungsgemäßer Einstellung lassen sich unter Antiparallelschaltung der jeweils um 180° versetzten Signale aus den Photoempfängern 5, 7 bzw. 6, 8 zwei um 90° gegeneinander phasenverschobene in der Grundform sinusförmige analoge Meßsignale erzeugen, bei denen das eine Signal dem anderen verstellrichtungsabhängig bei Relativverstellung der die Teile 2 bis 9 enthaltenden Abtasteinheit gegenüber dem Maßstab 1 vor- bzw. nacheilt, so daß über diese Signale Zähl- oder Steuereinrichtungen verstellrichtungsabhängig gesteuert werden können.

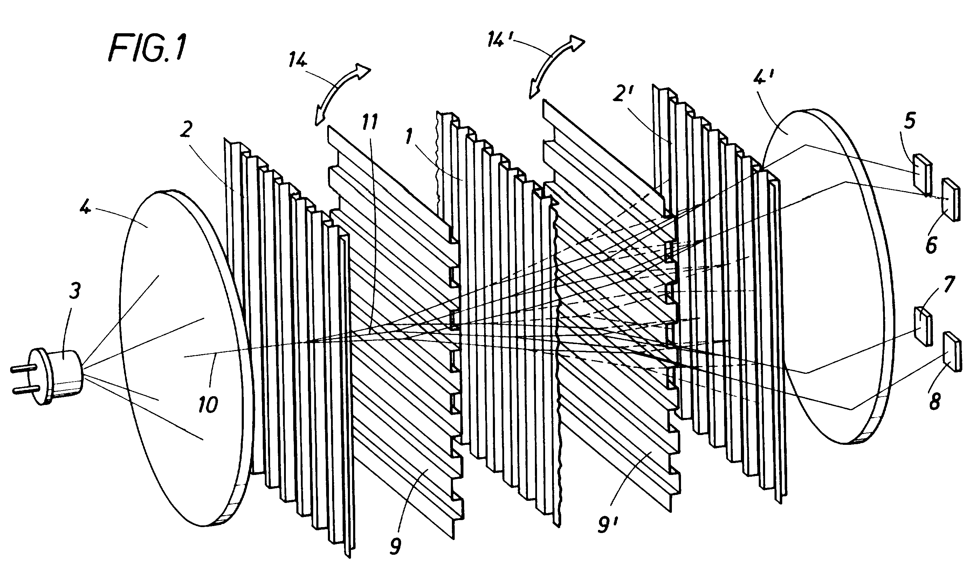

Wie durch Pfeile 14, 14' in Fig. 1 angedeutet wurde, ist das Leit-Phasengitter um eine normal zu seiner Hauptebene verlaufende Achse drehend einstellbar. Dadurch wird die Aufteilung der Teilstrahlenbündel 12, 13 und der Mittelabstand ihrer Auftreffstellen am Maßstab-Phasengitter 1 verändert und in weiterer Folge der Phasenabstand der an den Empfängern 5 bis 8 erzeugten Signale beeinflußt. Die Dreheinstellung des Leit-Phasengitters 9 kann bei der Montage des Meßsystems erfolgen. Es ist aber auch möglich, eine Überwachungsschaltung vorzusehen, die den Phasenabstand der an den Empfängern 5 bis 8 auftretenden Signale sowie gegebenenfalls die Signalhöhe bzw. die relative Signalhöhe überwacht und bei Abweichungen vom eingestellten Sollwert einen Drehantrieb für das Leit-Phasengitter 9 betätigt. Zusätzlich zur Drehverstellung in Pfeilrichtung 14 wäre auch eine Relativeinstellung zwischen den Gittern 2, 1 in Richtung der Hauptachse, also normal zur Gitterebene denkbar.

## Patentansprüche

1. Photoelektrische Positionsmeßeinrichtung, mit einem Maßstab-Phasengitter (1), wenigstens einem relativ zum Maßstab verstellbaren Abtast-Phasengitter (2), wenigstens einer relativ zu dem bzw. den Abtast-Phasengittern feststehenden Lichtquelle (3) mit Kollimator und Photoempfängern (5 - 8), die Gruppen bestimmter Beugungsordnung aus den durch die zweimalige Beugung des Lichtes an dem bzw. den Abtast-Phasengittern (2) und die wenigstens einmalige Beugung am Maßstab-Phasengitter (1) entstehenden Interferenzbildern empfangen und entsprechend von deren Intensitätsänderungen bei der Relatiwerstellung von Abtast- und Maßstab-Phasengittern periodische, gegeneinander phasenverschobene Meßsignale erzeugen, dadurch gekennzeichnet, daß in den Lichtstrahlengang (10, 11) wenigstens ein Leit-Phasengitter (9) mit gegenüber dem Maßstab- und Abtastphasengitter querverlaufenden Stegen und Furchen eingeschaltet ist, welches das der Beugung unterworfene Lichtstrahlenbündel quer zur Beugungsrichtung an Maßstab- und Abtastphasengittern (1, 2) in zwei Teilstrahlenbereiche (12, 13) auffächert, und daß für die Gruppen gleicher Beugungsrichtung der Teilstrahlenbündel gesonderte Photoempfänger (5, 6 bzw. 7, 8) vorhanden sind.

2. Positionsmeßeinrichtung nach Anspruch 1, dadurch gekennzeichnet, daß das Leit-Phasengitter (9) ein Steg-/Furchenverhältnis von 1 : 1 bei einer der Wellenlänge des eingesetzten Lichtes entsprechenden Furchentiefe aufweist, so daß es das Licht vorwiegend in die Beugungsrichtungen +1. und -1.-Ordnung beugt.

3. Positionsmeßeinrichtung nach Anspruch 1 oder 2, dadurch gekennzeichnet, daß das Leit-Phasengitter (9) um eine normal zu seiner Hauptebene verlaufende Achse drehend einstellbar ist.

4. Positionsmeßeinrichtung nach Anspruch 1 oder 2, dadurch gekennzeichnet, daß das Leit-Phasengitter (9) mit dem bzw. dem einen Abtastphasengitter (2) zu einem Kreuzgitter zusammengefaßt ist, wobei vorzugsweise die Gitterlinien einander in einem von 90° abweichenden Winkel, z.B. unter 45°, kreuzen.

5. Positionsmeßeinrichtung nach einem der Ansprüche 1 - 4, dadurch gekennzeichnet, daß das Leit-Phasengitter (9) die Teilstrahlenbündel (12, 13) in Verstellrichtung des Abtast-Phasengitters (2) gegenüber dem Maßstab-Phasengitter nur so weit spreizt, daß sich ihre Einfallsbereiche auf das Maßstab-Phasengitter weitgehend überlappen.

## Claims

1. A photoelectric position-measuring device comprising a scale phase grating (1), at least one scanning phase grating (2) movable relative to the scale, at least one light source (3) stationary relative to the scanning phase grating or gratings and comprising a collimator and photo-receivers (5-8) which receive groups of interference patterns having a given diffraction order out of those produced by the double diffraction of light at the scanning phase grating or gratings (2) and the at least single diffraction at the scale phase grating (1) and, depending on the variations in intensity thereof on relative movement of the scanning and the scale phase gratings, generate periodic mutually phase-shifted measuring signals, characterised in that at least one guide phase grating (9) having ridges and furrows extending transversely relative to the scale and scanning phase gratings is inserted in the path of the light rays (10, 11) and divides the diffracted beam transversely to the direction of diffraction at the scale and the scanning phase gratings (1, 2) into two component beam zones (12, 13), and in that separate photo-receivers (5, 6 or 7, 8) are provided for the groups having the same diffraction direction of the component beams.

2. A position-measuring device according to claim 1, characterised in that the guide phase grating (9) has a ridge/groove ratio of 1:1 with the depth of the grooves equal to the wavelength of the light used, so that it diffracts light mainly in the +1 and -1 order directions of diffraction.

3. A position-measuring device according to claim 1 or 2, characterised in that the guide phase grating (9) is adjustable in rotation around an axis at right angles to its main plane.

4. A position-measuring device according to claim 1 or 2, characterised in that the guide phase grating (9) is combined with a scanning phase grating (2) to form a cross-grating, the lines whereof intersect preferably at an angle different from 90°, e.g. at 45°.

5. A position-measuring device according to any of claims 1 to 4, characterised in that the guide phase grating (9) spreads the component beams (12, 13), in the direction of movement of the scanning phase grating (2) relative to the scale phase grating, just sufficiently for their zones of incidence on the scale phase grating to substantially overlap.

## Revendications

1. Dispositif photoélectrique de mesure d'une position, comprenant un réseau de phase d'échelle (1), au moins un réseau de phase d'exploration (2) qui peut être déplacé par rapport à l'échelle, au moins une source de lumière (3) qui est fixe par rapport au ou aux réseaux de phase d'exploration, respectivement, et qui est pourvue d'un collimateur et de récepteurs photoélectriques (5 à 8), ceux-ci recevant les groupes d'ordre de diffraction déterminé provenant des images interférentielles produites par la double réfraction de la lumière sur le ou les réseaux de phase d'exploration (2), respectivement, et par la réfraction au moins simple sur le réseau de phase d'échelle (1), et engendrant des signaux de mesure périodiques et déphasés entre eux en correspondance avec les modifications d'intensité de ces groupes lors du déplacement relatif des réseaux de phase d'exploration et d'échelle, caractérisé par le fait qu'est interposé dans le trajet des rayons lumineux (10, 11) au moins un réseau de phase directeur (9) dont les nervures et les sillons s'étendent transversalement par rapport aux réseaux de phase d'échelle et d'exploration et qui disperse en deux zones de rayons partielles (12, 13) sur des réseaux de phase d'exploration et d'échelle (1, 2), transversalement par rapport à la direction de la diffraction, le faisceau de rayons lumineux soumis à la diffraction, et par le fait que des récepteurs photoélectriques séparés (5, 6 respectivement 7, 8) sont présents pour les groupes dont la direction de diffraction des faisceaux de rayons lumineux partiels est la même.

2. Dispositif de mesure d'une position selon la revendication 1, caractérisé par le fait que le réseau de phase directeur (9) présente un rapport entre la largeur des nervures et des sillons qui est égal à 1/1 pour une profondeur des sillons correspondant à la longueur d'onde de la lumière utilisée, de sorte qu'il diffracte la lumière d'une manière prépondérante dans les directions de diffraction d'ordres +1 et -1.

3. Dispositif de mesure d'une position selon la revendication 1 ou 2, caractérisé par le fait que le réseau de phase directeur (9) peut être réglé par rotation autour d'un axe qui s'étend perpendiculairement à son plan principal.

4. Dispositif de mesure d'une position selon la revendication 1 ou 2, caractérisé par le fait que le réseau de phase directeur (9) est assemblé avec un réseau de phase d'exploration (2) pour donner un réseau croisé, les stries des réseaux se croisant de préférence entre elles sous un angle qui diffère de 90° et qui est par exemple inférieur à 45°.

5. Dispositif de mesure d'une position selon l'une des revendications 1 à 4, caractérisé par le fait que le réseau de phase directeur (9) n'élargit les faisceaux lumineux partiels (12, 13) dans la direction du déplacement du réseau de phase d'exploration (2) par rapport au réseau de phase d'échelle que suffisamment pour que leurs zones d'incidence sur le réseau de phase d'échelle se recouvrent largement.
